# EUROPEAN PATENT APPLICATION

(11) **EP 1 683 629 A1**
(43) Date of publication of application: **26.07.2006**
(21) Application number: 05447006.7
(22) Date of filing: 21.01.2005
(51) Int. Cl.: B32B 18/00, C04B 35/185

(54) **A composed substrate and method of production thereof**

(71) Applicant: "VLAAMSE INSTELLING VOOR TECHNOLOGISCH ONDERZOEK", afgekort "V.I.T.O.", 2400 Mol (BE)
(72) Inventor: Alvarez Diaz, Eduardo, 08391 Tiana Barcelona (ES); Matamala Giralt, Jose maria, 08911 Badalona Barcelona (ES); Snijkers, Frans, 3930 Hamont-Achel (BE); Van Hoolst, Jean, 2400 Mol (BE)
(74) Representative: Van Malderen, Joëlle

(57) **Abstract**

The present invention is related to a composed ceramic substrate comprising a base layer, consisting essentially of sintermullite, and a second layer attached to said base layer, the second layer consisting essentially of synthetic mullite. The invention is equally related to a method for producing said composed substrate.

## Description

### Field of the invention

The present invention is related to ceramic substrates, which can for example be applied in polycrystalline silicon solar cells.

### State-of-the-art

Sheet ceramic is often the preferred choice for a substrate material because of its chemical stability against metals and its suitable thermal expansion coefficient. A few existing commercially available ceramics appear to satisfy this condition, such as, e.g. mullite (3Al₂O₃.2SiO₂), alumina (Al₂O₃) or zirconia (ZrO₂).

Ceramic substrates can be manufactured by conventional (dry) techniques, like pressing (uni-axial or hot or cold isostatic) or by more advanced wet techniques. Tape casting is such a wet technique which requires the ceramic powder to be part of a suspension in an intermediate stage of the process. After further drying, the so-called green product is obtained, consisting of the ceramic powder in a polymer matrix. After calcining and sintering of the green product, the sintered ceramic product is obtained.

The suspension used for the tape casting technique typically comprises a ceramic powder, a dispersing medium, a dispersant and a binder. Usually, at least one or a mixture of two plasticisers are added. Optionally, wetting agents, surfactants and antifoaming agents can be added. The dispersing medium can be either an organic solvent or water. The binder is typically a synthetic organic compound.

[0003] In general, manufacturing of ceramic substrates by tape casting involves the following process sequence :
- suspension preparation and homogenising
- de-airing
- tape casting (on substrate foil)
- drying,
- stripping from substrate foil (resulting in the 'green' tape)
- optional processes: laminating, calendering
- calcining
- sintering
- optional processes: polishing, lapping.

[0004] Ceramic products that are obtained in this way are used for various purposes and by various production processes. Tape casting is a well-known technique to produce ceramic substrates of various chemical compounds like alumina (Al₂O₃) and aluminium nitride (AlN) that are applied e.g. in the electronics industry as substrates for e.g. electronic circuits. Another application of the tape casting technique is in the field of fuel cells, more specifically the Solid Oxide Fuel Cell (SOFC) type, where compounds like 8YSZ or 10YSZ (Yttrium Stabilised Zirconium oxide with 8 or 10 mole% of Y2O3) are tape casted to give an electrolyte layer (for electrolyte supported designs) or compounds like La₁₋ₓSrₓMn_{1-y}Co_{y}O_{3-δ} (LSMC) or La₁₋ₓSrₓFe_{1-y}Co_{y}O_{3-δ} (LSFC) for anode supported SOFC-designs.

Mullite (3Al₂O₃.2SiO₂) has been considered for the production of substrates or solar cells as in 'Progress in Photovoltaics: Research and Application', Prog. Photovolt: Res. Appl. 7. 437-447 (1999), and 'Polycrystalline Silicon Solar Cells on Mullite Substrates' by A. Slaoui et al., Solar Energy Materials and Solar cells 7(2000), p. 245-252. Process techniques are described in 'Manufacture of mullite substrates from andalusite for the development of thin film solar cells' by F. Mazel et al, J. Eur. Ceram. Soc. 22 (2002) 453-461.

Using cheap raw materials like andalusite, kyanite or kaolinite is an economical method to produce ceramic mullite components. This class of mullites is denoted by 'sintermullite', also described in 'Mullite and Mullite Ceramics', page 105, by H. Schneider, K. Okada and J.A. Pask (ISBN 0 471 94249 9, John Wiley & Sons Ltd., Chicester UK).

Document FR-A-2803437 relates to the fabrication of ceramic substrates for photovoltaic cells. The fabrication process comprises the preparation of a ceramic slurry using ceramic particles with general formula SiAl₂O₅.

In JP2000302524 ('manufacture of ceramic substrate for polycrystalline silicon thin film type solar cell using kaolin clay') a method is provided for the manufacturing of a ceramic mullite substrate for polycrystalline silicon solar cells using kaoline clay. The method is cheap since it uses kaolin which is a cheap and natural raw material.

One disadvantage of the use of kaoline or andalusite or any other alike clay mineral (kyanite, sillimanite, topaz, staurolite or related minerals) is the fact that they always contain a certain amount of impurities. In addition, the concentration and type of these impurity elements can vary strongly. Combined with the high deposition temperatures of polycrystalline silicon, these impurity elements are likely to affect the efficiency of the solar cell, e.g. through diffusion into the silicon layer or by negatively affecting the optical properties of the substrate.

A further drawback of the use of sintermullite as substrate for polycrystalline silicon solar cells, is the property of considerable porosity that is intrinsically present in sintermullite, even if high sintering temperatures (> 1700°C) are used. Porosity in substrates for solar cells is unwanted since it adds to the roughness of the substrates or it is responsible for the absence of 'surface area' needed for solar cell efficiency.

To overcome the drawbacks of intrinsically impure and porous sintermullite, it has been considered to manufacture ceramic substrates from so-called synthetic mullite, also called chemical or high purity mullite. There are various production methods for synthetic mullite as outlined in 'Mullite and Mullite Ceramics', pages 122 to 145, by H. Schneider, K. Okada and J.A. Pask (ISBN 0 471 94249 9, John Wiley & Sons Ltd., Chicester UK). Such methods are typically the sol-gel method, by precipitation, by hydrolysis, by spray pyrolysis, by chemical vapour deposition (CVD), by self-combustion or hydrothermally. A drawback of above chemical methods for mullite production is their cost. This makes ceramic substrates from bulk synthetic mullite not interesting from an economical point of view.

### Aims of the invention

The present invention aims at providing ceramic substrates that do not suffer the drawbacks of prior art products. Notably, it is an aim of the invention to provide a ceramic substrate consisting mainly of sintermullite, but without the drawbacks related to the degree of impurity and degree of porosity of sintermullite.

### Summary of the invention ― short description of drawing

The present invention is related to a ceramic substrate and method of producing thereof, such as described in the appended claims.

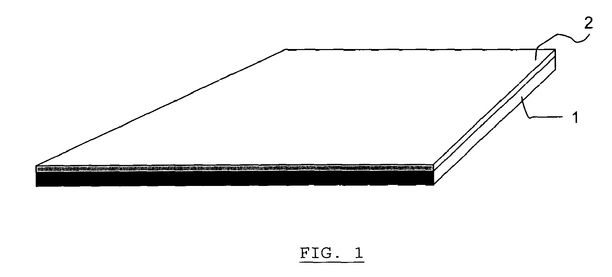

Figure 1 shows a view of a composed substrate according to the invention.

### Detailed description of the invention

The present invention is related to a ceramic substrate as shown in figure 1, consisting of a base layer 1 consisting essentially of sintermullite ceramic material, obtained from a raw material, such as andalusite, kyanite or kaolinite/kaoline. Attached to the base layer is a second layer 2 consisting essentially of synthetic mullite. For both layers, it is to be understood, that the phrasing 'consisting essentially' means that the layers comprise primarily sintermullite and synthetic mullite respectively, and accidental impurities. In the preferred case, the synthetic mullite layer comprises less than 0.02% of Fe, less than 0.05% of Na, less than 0.03% of Mg and less than 0.03% of Ca.

The result is a composed substrate with a number of advantages with respect to the prior art : the second layer has a higher degree of purity and a lower degree of porosity than existing sintermullite substrates, and therefore allows to avoid the problems occurring in the prior art because of those aspects. Furthermore, as only a part of the composed substrate consists of synthetic mullite, the cost of the substrate can be reduced.

The invention is equally related to a method for manufacturing such a composed substrate, comprising the steps of providing raw materials for both the base layer and the second layer, and compounding said base layer with said second layer to obtain the composed substrate. Several methods of compounding the two layers will be described further on in this description.

The preferred embodiment is however characterized by the materials used for the production of the base layer. This base layer is a sintermullite substrate, produced from one or more known aluminium silicate minerals, such as kaolinite or andalusite. According to the preferred embodiment, an Al-compound other than alumina (A12O3) is added to those raw materials, preferably in combination with an amount of alumina. The Al-compound is added to influence the shrinking behaviour of the composed substrate. Since processing of ceramic components involves a sintering step, it is characterized by a reduction of the dimensions of the original green product. This size reduction is called sinter shrinkage and its amount depends on a large quantity of parameters, e.g. the ceramic powder or raw materials (sinter-activity, grain size, specific surface area) the sintering temperature profile as a function of time, and the green density, suspension composition, e.g. amount of binder an other organic constituents used. In order to successfully produce bi-layer ceramic products, it is necessary to combine green products that have a less comparable shrinkage profile but a similar amount of total shrinkage. The addition of the Al-compound according to the invention, allows to control the shrinking behaviour.

For the production of sintermullite substrates, it is known to add alumina to the raw material, for example in the case of kaoline, where the alumina is added for conversion to more or less stoechiometric mullite:

2Al₂(OH)₄[Si₂O₅](kaolinite) ->2Al₂Si₂O₇ (metakaolin) + 4H₂O -> 0.67[3Al₂O₃.2Si₂O₇] (3-2 mullite) + 2.67SiO₂: so, 4Al₂O₃ to be added

According to the preferred embodiment of the invention, all or a part of the alumina for the production of the base layer is replaced by another Al-compound. This compound can be Aluminiumhydroxide (A1(OH)3) or boehmite (AlO(OH)) or other, e.g. aluminiumnitrate (Al(NO₃)₃). It is preferably added in combination with alumina (Al2O3), in such a relation that stoechiometric mullite can still be obtained after conversion.

By adjusting the amount of the additional Al-compound, it is possible to control the level of sinter shrinkage to a value that is in agreement with the sinter shrinkage of e.g. green tape of high purity mullite which is attached to the base layer. In the extreme case, all the alumina is replaced by the additional Al-compound.
Tests have shown that shrinkage during sintering changes from 12.3% for a sintermullite substrate with only alumina-addition (no additional Al-compound), to about 22% for a substrate wherein all the alumina has been replaced by aluminiumhydroxide.

In the following, a number of methods are described for the actual compounding of the two layers. These methods are often based on existing methods for producing non-composed layers. The methods are applicable on the raw materials, with or without the addition of alumina or the additional Al-compound.

In a first embodiment, two tape casting suspensions are prepared. A first suspension uses the raw materials for sintermullite, such as kaoline, andalusite, kyanite and appropriate additions of alumina and other constituents. The second suspension uses high purity synthetic mullite powder. Both suspensions are de-aired and used in a variant of the tape casting process. This process is outlined in 'High strength alumina substrates produced by a multiple-layer casting technique', Ceramic Bulletin, vol. 52, n° 11, 1973, 850-854 by R.E. Mistler. In this process two layers are cast simultaneously on top of each other. After drying, the result is a green bi-layer substrate which is subsequently subjected to the steps of calcining, sintering and optionally polishing or lapping.

According to a second embodiment, the base layer is prepared by tape casting, as described in the paragraph on prior art. A suspension is then prepared of synthetic mullite in a liquid medium e.g. water or an organic solvent. This suspension, a so-called ink, is applied to the green base layer containing the raw materials for sinter mullite production, by direct serigraphic methods, e.g. screen printing or tampon printing or pad printing. Alternatively, the ink can be applied by an indirect serigraphic method, e.g. by the DECAL technique. After application of the ink and drying, a green bi-layer is again obtained, which is to be further treated by calcining, sintering and possibly polishing/lapping. As a variant to this embodiment, the ink can also be applied by one of the known printing techniques to a fired sintermullite substrate, i.e. a substrate which has already gone through a calcining and sintering operation. This would however require additional calcining and sintering steps to be undertaken on the bi-layer.

According to a third embodiment, the sintermullite base layer as well as the synthetic mullite second layer are produced by tape casting after which the green synthetic mullite layer is laminated onto the green base layer. To produce a high purity chemical green layer by tape casting, the following steps are preferably applied
- preparation of a stable suspension : a ceramic powder, a dispersing medium, a dispersant, and a binder, and optionally a wetting agent, surfactant, one or more plasticizers and/or anti-foaming agents are added to a ball mill containing milling balls. The rheology of the suspension is adapted to a typical tape casting process. The tape cast suspension is designed to have typical rheological properties like shear thinning behaviour and a viscosity η = 1 to 5 Pa.s at shear rate = 10 s⁻¹.
- in order to remove the milling balls and large gas bubbles from the suspension the content of the ball mill is poured over a coarse sieve.
- degassing is done in order to remove entrapped air bubbles from the suspension. Air bubbles in the sintered tape can be seen as flaws that reduce the mechanical properties of the tape.
- tape casting of the ceramic material on mylar or silicone coated mylar as a substrate foil, cast speeds are typically between 0.25cm/s to 5cm/s, gap between the doctor blade and the substrate film typically 100 to 500 micron.
- drying (at room temperature or above)
- removing of the dried layer from the substrate (e.g. mylar or silicone coated mylar foil) resulting in the green layer.

This kind of green layer typically results in ceramic products with density of 95%TD or even higher than 98%TD upon sintering. These densities are expressed as a percentage of the 'theoretical density' (TD), which is the maximum density obtainable for a given mullite type (e.g. 3-2 mullite). The green layer is subsequently applied to a green base layer by laminating. This lamination process involves heating of both green products (preferably above the glass transition temperature of the binder(s) that are (is) contained in the green layer(s)), and joining them while exerting mechanical pressure. The result is again a green bi-layer, which is thereafter subjected to calcining, sintering and possibly polishing/lapping.

The latter three finishing steps, in all three of the previously described embodiments, preferably consist in more detail of :
- calcining at 500°C to remove the organic constituents
- sintering: in air, at temperatures ranging from 1500°C to 1750°C by heating the substrate at a heating rate of typically 120°C/hour and subsequently cooling down at a typical cooling rate of 180°C/hour to produce sintered ceramic sheet.
- optionally further machining of the ceramic product can be done by polishing or lapping of the surface.

Regardless of the production method, the substrates of the invention preferably have a top (synthetic mullite) layer with a theoretical density of at least 90%. Further preferred embodiments concern second layers with theoretical densities of at least 95% and 97.5% respectively. The thickness of the base layer is preferably 0.1mm min. and 3mm max., more preferably 0.5mm min. and 1.5mm max. The thickness of the second layer is preferably 5µm min. and 1000µm max., more preferably 100µm min. and 300µm max.

## Claims

1. A composed ceramic substrate comprising a base layer (1) consisting essentially of sintermullite and accidental impurities, with a second layer (2) attached to said base layer, said second layer consisting essentially of synthetic mullite and accidental impurities.

2. The substrate according to claim 1, wherein the second layer has a density of at least 90%TD, preferably at least 95%TD.

3. The substrate according to claim 1 or 2, wherein the second layer has a density of at least 97.5%TD.

4. The substrate according to any one of claims 1 to 3, wherein the thickness of the base layer is minimum 0.1mm and maximum 3mm, preferably minimum 0.5mm and maximum 1.5mm.

5. The substrate according to any one of claims 1 to 3, wherein the thickness of the second layer is minimum 5µm and maximum 1000µm, preferably minimum 100µm and maximum 300µm.

6. The substrate of any one of claims 1 to 5, wherein the second layer comprises less than 0.02% of Fe, less than 0.05% of Na, less than 0.03% of Mg and less than 0.03% of Ca.

7. A method for the fabrication of a substrate according to any one of claims 1 to 6, comprising the steps of :
- providing raw materials for the production of a base layer consisting essentially of sintermullite, said materials comprising at least an aluminium silicate mineral,
- providing raw materials for the production of a second layer consisting essentially of synthetic mullite,
- producing a composed substrate wherein said second layer is attached to said base layer.

8. The method according to claim 7, wherein said raw materials for the production of the base layer further comprise an Al-compound, said Al-compound not being alumina.

9. The method according to claim 8, wherein said raw materials for the production of the base layer comprise an amount of alumina besides said Al-compound.

10. The method according to claim 8 or 9, wherein said Al-compound is aluminiumhydroxide or boehmite.

11. The method according to any one of claims 7 to 10, wherein said aluminium silicate mineral is andalusite or kyanite or kaolinite/kaoline.

12. The method according to any one of claims 7 to 11, wherein said base layer and said second layer are produced separately, each by a tape casting process, yielding a green base layer and a green second layer and wherein said green second layer is afterwards laminated on top of said green base layer to form a composed green substrate, followed by at least the steps of calcining and sintering of the composed substrate.

13. The method according to any one of claims 7 to 11, wherein said base layer and said second layer are produced separately, each by a tape casting process, yielding a fired base layer and a green second layer and wherein said green second layer is afterwards laminated on top of said green base layer, to form a composed substrate, followed by at least the steps of calcining and sintering of the composed substrate.

14. The method according to any one of claims 7 to 11, wherein the second layer is applied on top of the base layer by direct serigraphy or by indirect serigraphy.

15. The method according to any one of claims 7 to 11 wherein the composed substrate is obtained by simultaneous tape casting ('co-casting') of the second layer on top of the base layer.

16. Solar cell comprising a ceramic composed substrate according to any one of claims 1 to 6.
